(19) Europäisches Patentamt / European Patent Office / Office européen des brevets

(11) **EP 2 932 357 B1**

(12) **FASCICULE DE BREVET EUROPEEN**

(45) Date de publication et mention de la délivrance du brevet:
**09.01.2019 Bulletin 2019/02**

(21) Numéro de dépôt: **13818714.1**

(22) Date de dépôt: **16.12.2013**

(51) Int Cl.:
**G06F 3/01** *(2006.01)*

(86) Numéro de dépôt international:
**PCT/EP2013/076770**

(87) Numéro de publication internationale:
**WO 2014/095765 (26.06.2014 Gazette 2014/26)**

(54) **SYSTÈME HAPTIQUE POUR FAIRE INTERAGIR SANS CONTACT AU MOINS UNE PARTIE DU CORPS D'UN UTILISATEUR AVEC UN ENVIRONNEMENT VIRTUEL**

HAPTISCHES SYSTEM ZUR HERSTELLUNG EINER KONTAKTFREIEN WECHSELWIRKUNG ZWISCHEN MINDESTENS EINEM TEIL DES KÖRPERS EINES BENUTZERS UND EINER VIRTUELLEN UMGEBUNG

HAPTIC SYSTEM FOR ESTABLISHING A CONTACT FREE INTERACTION BETWEEN AT LEAST ONE PART OF A USER'S BODY AND A VIRTUAL ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2012 FR 1262156**

(43) Date de publication de la demande:
**21.10.2015 Bulletin 2015/43**

(73) Titulaires:
  • **Centre National de la Recherche Scientifique**
    **75016 Paris (FR)**
  • **Université Pierre et Marie Curie (Paris 6)**
    **75252 Paris Cedex 05 (FR)**

(72) Inventeurs:
  • **AMMI, Medhi**
    **F-91300 Massy (FR)**
  • **OUARTI, Nizar**
    **F-91410 Dourdan (FR)**

(74) Mandataire: **IPAZ**
    **Parc Les Algorithmes, Bâtiment Platon**
    **CS 70003 Saint-Aubin**
    **91192 Gif-sur-Yvette Cedex (FR)**

(56) Documents cités:
    EP-A1- 1 768 011          WO-A1-2011/117794
    US-A1- 2003 117 371

  • **HOSHI T ET AL: "Noncontact Tactile Display Based on Radiation Pressure of Airborne Ultrasound", IEEE TRANSACTIONS ON HAPTICS, IEEE, USA, vol. 3, no. 3, 1 juillet 2010 (2010-07-01) , pages 155-165, XP011301516, ISSN: 1939-1412 cité dans la demande**

**Description**

L'invention concerne un procédé et un système haptique pour faire interagir sans contact au moins une partie du corps d'un utilisateur avec un environnement virtuel et s'applique au domaine des interfaces haptiques.

Les interfaces haptiques sont des systèmes mettant en oeuvre un ensemble de techniques issues notamment de la robotique et de l'informatique. Ces systèmes permettent de stimuler physiquement un utilisateur à travers des perceptions tactiles et kinesthésiques et/ou thermiques et permettent une meilleure immersion dans des environnements virtuels représentatifs ou non d'environnements réels.

Ainsi, les interfaces haptiques agissent sur l'utilisateur en lui appliquant des forces, vibrations, mouvements, ou changement de température permettant de ressentir des textures, formes, forces ou chaleurs.

A titre d'exemple, le système CyberTouch (marque déposée) développé par la société CyberGlove Systems consiste à porter un gant de données équipé de vibrateurs permettant de stimuler les doigts et la paume. Ce type de système a pour inconvénient d'être particulièrement intrusif.

Un autre exemple d'interface haptique a été proposé dans l'article de H. Takayuki, T. Masafumi, I. Takayuki and S. Hiroyuki intitulé "Noncontact tactile display based on radiation pressure of airborne ultrasound", IEEE Transactions on Haptics, vol. 3 no. 3, pp. 155-165, 2010. Il est proposé d'exploiter la pression du rayonnement acoustique généré par des transcodeurs à ultrasons afin de stimuler l'utilisateur. Cela permet de mettre en oeuvre une interface haptique sans contact direct avec l'utilisateur. Cette interface se base sur le contrôle des retards de phases des ondes acoustiques pour produire un point focal. Le principal inconvénient de cette technologie concerne la limite d'intensité de la force appliquée à l'utilisateur. Un autre inconvénient non négligeable est qu'elle peut entrainer des risques médicaux, en particulier lors d'interactions avec des régions sensibles comme par exemple la tête ou le visage.

Un autre exemple se base sur l'utilisation d'une pluralité de jets d'airs comme présenté dans l'article de Y. Suzuki et M. Kobayashi intitulé « Air jet driven force feedback in virtual reality », IEEE Computer Graphics and Applications, pages 44-47, 2005. Cet article divulgue un système haptique constitué de jets d'air multiples disposés en matrice et des récepteurs d'air rigides tenus par l'utilisateur. Les jets d'air libérés pas des buses frappent les récepteurs d'air et appliquent des forces sur la main de l'utilisateur. Ce dispositif haptique permet une interaction d'un utilisateur avec des surfaces statiques ou dynamiques. Cette stratégie présente notamment comme inconvénient une résolution limitée en force et en position. En outre, l'utilisateur doit être muni d'au moins un effecteur, c'est-à-dire d'un récepteur d'air rigide par exemple.

Le document EP1768011 décrit un appareil à retour de force incluant une buse et des moyens de contrôle du débit et de la direction du gaz selon la position d'un récepteur recevant la pression de façon à fournir un retour de force. Le document WO2011/117794 décrit une techique de retour haptique utilisant une buse à gaz pour diriger l'air parpendiculairement à la surface de la peau d'un sujet humain. Le document US 2003/117371 décrit un système de retour haptique à jet d'air, utilisant de l'air comprimé, situé à distance d'un afficheur pour les extrémités des doigts.

Il apparaît qu'aucun des systèmes haptiques mentionnés ci-dessus ne permettent à la fois de s'affranchir d'un contact direct avec l'utilisateur tout en permettant d'accéder sans danger à une grande richesse de rendu et de perception tels qu'une perception volumique, un guidage gestuel tridimensionnel, etc.

Un but de l'invention est notamment de pallier les inconvénients précités.

A cet effet l'invention a pour objets un système système haptique pour faire interagir au moins une partie du corps d'un utilisateur appelée zone de stimulation avec un environnement virtuel. Le système comprend des moyens d'estimation de la position de la zone de stimulation, des moyens d'émission vers la zone de stimulation d'au moins un jet d'air contrôlé en débit, le jet d'air étant émis en un point d'émission et son débit étant déterminé en fonction de la position estimée de la zone de stimulation dans l'espace et des caractéristiques de l'environnement virtuel. Le système comprend en outre une structure robotisée contrôlée de manière à déplacer le point d'émission du jet d'air de manière à ce que ledit point d'émission reste à une distance constante de la zone de stimulation.

Selon un aspect de l'invention, la structure robotisée est un bras robotisé articulé.

Le système comprend par exemple des moyens de modélisation et d'affichage de l'environnement virtuel avec lequel l'utilisateur va interagir.

L'environnement virtuel correspond par exemple à une modélisation d'un environnement réel avec lequel l'utilisateur interagit à distance.

Selon un aspect de l'invention, les moyens d'émission comprennent un dispositif de type contrôleur de débit massique de manière à contrôler le débit du jet d'air.

Les moyens d'émission comprennent par exemple une buse de soufflage, le point d'émission du jet d'air correspondant à l'extrémité libre de ladite buse.

La buse de soufflage est par exemple alimentée par au moins deux sources d'air de températures différentes, lesdits flux étant mélangés de manière à faire varier la température du jet d'air en sortie de la buse.

La zone de stimulation correspond par exemple à la zone définie par les phalanges intermédiaires de la main de l'utilisateur.

La buse de soufflage présente par exemple un angle de divergence inférieur à 12,5 degrés de manière à obtenir stimuler une surface peu étendue de la zone de stimulation.

La distance entre la sortie de la buse de soufflage et la zone de stimulation de l'utilisateur est comprise par exemple entre dix et vingt centimètres.

La distance entre la sortie de la buse de soufflage et la zone de stimulation de l'utilisateur est par exemple égale à quinze centimètres.

La buse de soufflage présente par exemple un angle de divergence entre 12,5 degrés et 22 degrés de manière à stimuler une surface étendue de la zone de stimulation.

Un contrôleur de débit est par exemple utilisé de manière à faire varier le débit d'air alimentant la buse de soufflage.

Un capteur de débit est par exemple utilisé de manière à obtenir une estimation du débit d'émission à l'entrée de la buse de soufflage.

Une valeur de régulation est par exemple appliquée au contrôleur de débit de manière à obtenir un débit en sortie de la buse de soufflage proche de la valeur de consigne Dcons lorsqu'une différence entre la valeur estimée de débit et la consigne Dcons est détectée.

L'estimation du débit à l'entrée de la buse de soufflage est par exemple comparée avec une valeur de consigne Dcons à l'aide d'un régulateur électronique numérique.

La valeur de consigne de débit Dcons est par exemple déterminée en utilisant l'expression suivante :

$$Dcons = F * k$$

dans laquelle :

Dcons représente la consigne de débit exprimée en litres par minute (L/min) ; F représente le module de la force à appliquer sur la zone de stimulation, en Newton (N), cette valeur étant déterminée grâce à la mise en oeuvre d'un modèle d'interaction avec l'environnement virtuel ; k est une constante exprimée en L/min*N.

Dans un mode de réalisation, le système haptique comprend des moyens de vaporisation d'eau vers la zone de stimulation de manière à faire varier le niveau d'humidité de ladite zone.

Les moyens de vaporisation d'eau sont par exemple mis en oeuvre à l'aide d'un spray aérosol.

D'autres caractéristiques et avantages de l'invention apparaîtront à l'aide de la description qui suit donnée à titre illustratif et non limitatif, faite en regard des dessins annexés parmi lesquels :

- la figure 1 présente schématiquement le principe du système haptique selon l'invention ;
- la figure 2 donne un exemple de système permettant l'estimation de la position est de suivre les mouvements d'une zone de stimulation ;
- la figure 3 donne un exemple de procédé permettant de déterminer la position et l'orientation de la zone de stimulation ;
- figure 4 illustre de manière schématique les interactions entre les différents éléments composant le système haptique selon l'invention.

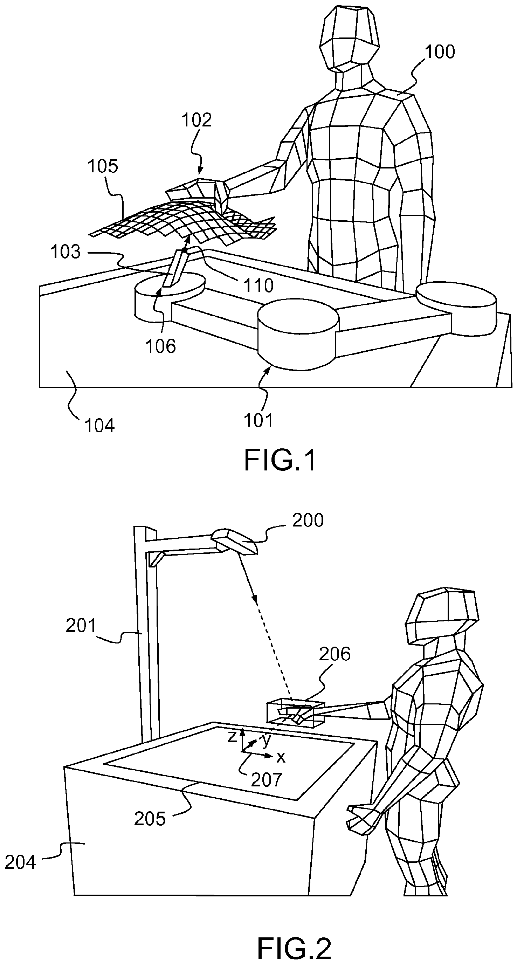

La figure 1 présente schématiquement le principe du système haptique selon l'invention.

Ce système haptique met en oeuvre une interface haptique permettant à un utilisateur 100 d'interagir avec un environnement virtuel 105. Pour cela, l'utilisateur 100 utilise une partie de son corps appelé dans la suite de cette description « zone de stimulation ». Dans cet exemple, la zone de stimulation correspond à une partie de la main 102 de l'utilisateur. Le système haptique peut également être adapté à d'autres zones de stimulation comme par exemple le bras ou la tête.

Le système haptique comprend notamment une structure robotisé. Dans cet exemple, le système robotisé utilisé est un bras robotisé articulé 101. Le système robotisé comprend une zone particulière appelée dans la suite de la description « zone de fixation ». Dans cet exemple, la zone de fixation 106 correspond à l'extrémité du bras robotisé 101.

Alternativement, d'autres types de systèmes robotisés peuvent être utilisés. À titre d'exemple, un système de type table traçante peut être utilisé.

Le système haptique comprend également un dispositif d'émission 103 d'au moins un jet d'air. Ce dispositif 103 est fixé à la structure robotisée 101 au niveau d'une zone de fixation 106 et est agencé de manière à ce que le jet d'air soit dirigé vers la zone de stimulation 102.

La structure robotisée a pour fonction de suivre les mouvements de la zone de stimulation en maintenant une distance constante entre le point d'émission du jet d'air et ladite zone de stimulation.

L'utilisateur 100 déplace la zone de stimulation 102 dans un espace de travail de manière à interagir avec l'environnement virtuel 105. Cette zone de travail correspond par exemple à un espace tridimensionnel. Pour que l'utilisateur 100 ait intuitivement une idée de l'étendue de cet espace, une table 104 sur laquelle est fixé la structure robotisée peut être utilisée. Ainsi, dans le cas ou l'espace de travail est tridimensionnel, l'utilisateur percevra qu'il ne peut déplacer la zone de stimulation que dans l'espace défini par le prolongement vers le haut des côtés de cette table 104.

De manière essentielle, le débit d'émission du jet d'air est contrôlé en tenant compte de la position estimée de la zone de stimulation 102 dans l'espace et des caractéristiques de l'environnement virtuel 105. En effet, la position estimée de la zone de stimulation 102 dans l'espace correspond à une position dans l'espace de l'environnement virtuel et permet donc de déterminer le type de sensations que doit ressentir l'utilisateur. À titre d'exemple, si la zone de stimulation et en contact avec une surface d'un objet solide de l'environnement virtuel, l'utilisateur devra ressentir une forte résistance. Ainsi, le niveau de stimulation de la zone 102 est adapté de manière à ce que l'utilisateur 100 ressente précisément l'effet de ses actions dans l'environnement virtuel 105. Le débit peut être contrôlé en utilisant un dispositif de type contrôleur de débit massique.

Le déplacement du point d'émission du jet d'air est mis en oeuvre de manière à ce qu'il se trouve à une distance constante de la zone de stimulation 102 de l'utilisateur 100. Cela permet une exploitation optimale du jet d'air. La zone de stimulation et ainsi positionnée à une distance d'émission du jet d'air de manière à ce que la variation du débit d'émission permette de communiquer l'utilisateur des sensations tactiles variées et de niveaux différents, comme par exemple une sensation de contact avec un solide, une sensation de frottement ou une sensation de contact avec une matière flexible.

Le système haptique comprend en outre des moyens pour déterminer la position de la zone de stimulation 102 dans l'espace de travail. L'estimation de cette position permet ensuite de contrôler les mouvements de la structure robotisée 101 de manière à maintenir le point d'émission du jet d'air à distance sensiblement constante de la zone de stimulation 102.

Selon un aspect de l'invention, l'environnement virtuel peut-être projeté sur un écran visible de l'utilisateur.

Ce système haptique présente donc l'avantage déterminant d'éviter tout recours à une structure mécanique intrusive devant être en contact avec une partie du corps de l'utilisateur 100. Le jet d'air stimule l'utilisateur en produisant une sensation d'interaction avec l'environnement virtuel.

La figure 2 donne un exemple de système permettant l'estimation de la position et de suivre les mouvements d'une zone de stimulation.

En effet, afin que le système haptique selon la mention puisse être mis en oeuvre, il faut pouvoir localiser la position de la zone de stimulation 206 et déterminer son orientation afin de suivre ses mouvements.

Pour cela, un capteur vidéo peut être positionné de manière à acquérir des images de l'espace de travail dans lequel évolue la partie du corps de l'utilisateur correspondant à la zone de stimulation. Ce capteur vidéo est par exemple composé par exemple d'un premier capteur d'image couleur de type RGB (Red Green Blue) permettant d'obtenir des coordonnées en abscisses et ordonnées et d'un second capteur de profondeur permettant d'obtenir une image de profondeur de la zone à stimuler.

Un support 201 par exemple fixé à une table 204 délimitant l'espace de travail 205 peut être utilisé pour maintenir le capteur vidéo 200 dans une position lui permettant d'acquérir ces images. L'objectif est ensuite de déterminer la position d'un point central de la zone de stimulation. Cette position peut être par exemple exprimée dans un repère en trois dimensions 207 fixe par rapport à la table 204. En outre, l'orientation de la zone de stimulation déterminée.

À titre d'exemple, le système Kinect (marque déposée) peut être utilisé. Ce système génère une carte de profondeur permettant de déterminer la position et l'orientation de la zone de stimulation selon trois axes. Ces informations sont ensuite utilisées pour asservir la structure robotisée. D'autre types de capteurs peuvent être utilisés, comme par exemple des capteurs de mouvements couplés à des marqueurs positionné sur le corps de l'utilisateur près de la zone de stimulation, par exemple sur le dos de la main si la zone de stimulation est la paume de la main.

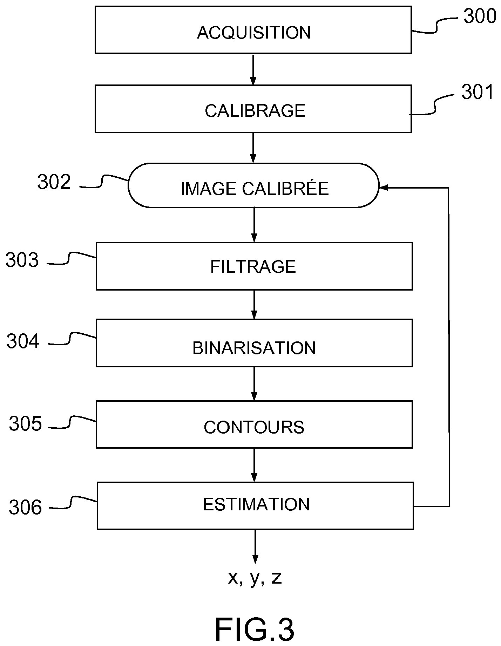

La figure 3 donne un exemple de procédé permettant de déterminer la position et l'orientation de la zone de stimulation.

Dans cet exemple, il est supposé que le capteur est un capteur d'images de type RGB et qu'il génère une succession d'images RGB.

Une première étape 300 a pour objectif d'acquérir une image RGB générée par le capteur. Cette image peut être convertie dans un format quelconque permettant de faciliter son traitement. À titre d'exemple, elle peut être convertie dans le format OpenCV de manière à permettre l'utilisation de cette librairie de fonctions. L'image renvoyée par le capteur d'images RGB représente la distance de chaque pixel par rapport à la position de la caméra. Ces valeurs peuvent être exprimées dans une unité arbitraire.

Il est possible que l'image RGB ne tienne pas compte de la courbure causée par l'optique du capteur. Ce défaut pourrait fausser les calculs de distances lorsqu'ils sont effectués directement sur l'image. Ainsi, une deuxième étape 301 met en oeuvre un calibrage de l'image afin d'assurer un suivi de la main avec une précision satisfaisante. Ce calibrage correspond à une transformation appliquée à l'image RGB. Ainsi, l'application de l'étape 301 permet d'obtenir une image calibrée 302 sur la base de l'image de profondeur calibrée.

Une troisième étape 303 a pour objectif d'appliquer un filtrage spatial pour isoler la partie du corps de l'utilisateur correspondant à la zone de stimulation du reste de l'environnement. Seuls les objets se trouvant au-dessus de la structure robotisée sont gardés. Cette opération peut être utilisée également pour délimiter la zone de traitement.

Une quatrième étape 304 applique une opération appelée « binarisation » sur la base de l'image filtrée et permet d'identifier quelles sont les zones de l'image auxquelles il faudra s'intéresser pour l'estimation de position.

Une cinquième étape 305 consiste à vérifier si l'un des objets visibles sur le masque binaire présente les caractéristiques de la partie du corps correspondant à la zone de stimulation. Cette étape est réalisée grâce à une opération classique de détection de contours.

Une sixième étape 306 a pour objectif d'estimer la position de la zone de stimulation dans l'espace de travail. Si la main est utilisée comme zone de stimulation, il est possible par exemple d'estimer la position de l'extrémité des doigts. Toutefois, il est possible de pointer d'autres parties comme la paume de la main par exemple.

Une septième étape non représentée peut aussi être mise en oeuvre afin d'estimer la profondeur de la zone de stimulation. Pour cela, un capteur permettant d'obtenir une image en profondeur peut être utilisé.

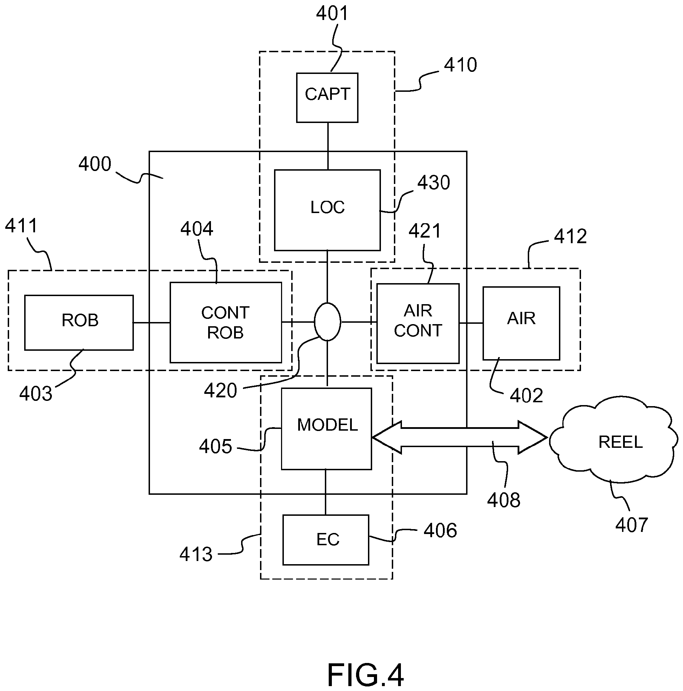

La figure 4 illustre de manière schématique les interactions entre les différents éléments composant le système haptique selon l'invention.

Le système haptique est composé d'un ensemble d'équipements physiques 401, 402 , 403, 406 contrôlés par exemple par un ensemble de ressources informatiques 400 mises en oeuvre à l'aide d'un processeur de calcul.

La structure robotisée 411 est composée d'un dispositif robotisé tel qu'un bras robot 403 ainsi que de ressources de contrôle 404 mise en oeuvre par exemple à l'aide d'une pluralité de programmes informatiques.

Le système comprend en outre des moyens 410 permettant d'identifier la position de la zone de stimulation et de suivre ses mouvements. Ces moyens 410 correspondent par exemple à un équipement 401 correspondant à un capteur produisant une image de profondeur de l'espace de travail. Ce capteur est couplé à un ensemble de ressources 430 permettant d'analyser les données qu'il fournit de manière à localiser de manière précise la zone de stimulation et de suivre ses mouvements.

Le système comprend également des moyens d'émission du jet d'air 412. Ces moyens sont par exemple composées d'un équipement d'émission 402 correspondant par exemple à une buse de soufflage couplé avec un contrôleur de débit non représenté et d'un ensemble de ressources par exemple informatiques 421 permettant de contrôler le débit d'émission du jet d'air.

Le système haptique peut également comprendre des moyens 413 de modélisation 403 et d'affichage 406 de l'environnement virtuel avec lequel l'utilisateur va interagir. Par exemple, l'environnement virtuel est modélisé 405 puis affiché 406 sur un écran visible de l'utilisateur du système haptique. Cet environnement virtuel peut être un environnement imaginé par un concepteur. Alternativement, l'environnement virtuel peut être une modélisation d'un environnement réel 407 avec lequel l'utilisateur souhaite interagir à distance. Ainsi, les modifications apportées par l'utilisateur à distance sur l'environnement réel 407 se répercutent 408 sur la modélisation 405 de l'espace virtuel affiché sur l'écran 406. Cela peut être particulièrement utile pour des applications de type opération chirurgicale de précision effectuée à distance.

Les sous-systèmes 410, 411, 412, 413, interagissent les uns avec les autres 420.

Les moyens d'émission d'au moins un jet d'air représentent l'une des parties essentielles de l'invention.

Il est difficile d'obtenir un modèle mécanique générique de l'écoulement d'un jet d'air du fait du nombre élevé de paramètres influents. Ainsi, afin de déterminer une distribution de pression adaptée au système haptique, une stratégie expérimentale peut être envisagée de manière à établir une relation entre le débit d'air à l'injection, la pression et la stimulation tactile.

Afin de déterminer les conditions optimales d'utilisation, c'est-à-dire les conditions permettant d'obtenir la meilleure interaction possible entre l'utilisateur et l'environnement virtuel, il est par exemple possible de déterminer un ensemble de trois éléments de contrôle :

- le choix de la ou des buses de soufflage, en particulier sa forme est sa dimension ;
- le débit d'air en sortie de la buse de soufflage ;
- la distance entre la sortie de la buse de soufflage et la zone de stimulation de l'utilisateur.

Dans un mode de réalisation, une buse permettant l'émission d'un jet d'air concentré est choisie de manière à obtenir une stimulation tactile sur surface peu étendue de la zone de stimulation. Pour cela, le choix de la forme de la buse de soufflage est déterminant car il existe une relation directe entre ladite forme et l'angle de diffusion du jet d'air.

Afin d'obtenir une émission concentrée sur une surface peu étendue de la zone de stimulation, une buse de soufflage présentant un angle de divergence inférieur à 12,5 degrés peut être utilisée.

Avantageusement, cette buse de soufflage peut être choisie en inox avec un trou central entouré de fentes de manière à générer un jet d'air concentré tout en limitant le niveau sonore lors du soufflage.

D'autres types de buses de soufflage avec des propriétés différentes peuvent être mises en oeuvre par le système selon l'invention en tenant compte notamment de l'application pour laquelle le système haptique est utilisé.

Ainsi, afin d'obtenir une stimulation sur surface étendue de la zone de stimulation, une buse de soufflage présentant à angle de divergence compris entre 12,5 degrés et 22 degrés peut être utilisée.

La buse de soufflage est connectée à une source d'air comprimé, par exemple par un tuyau en matière plastique souple. Un compresseur à air fournissant une pression suffisante par exemple égale à quatre bars peut être utilisé.

De manière à faire varier le débit d'air alimentant la buse, un contrôleur de débit est par exemple utilisé afin de réguler le débit massique de gaz. Un capteur de débit intégré au contrôleur de débit massique permet d'obtenir une estimation du débit courant à l'entrée de la buse. Cette valeur est comparée à l'aide d'un régulateur électronique numérique avec une valeur de consigne Dcons déterminée de manière à ce qu'une stimulation représentative de l'interaction de la zone de stimulation avec l'environnement virtuel soit produite. Si une différence entre la valeur estimée de débit et la consigne Dcons est détectée, une valeur de régulation appliquée au contrôleur de débit sera modifiée de manière à obtenir un débit en sortie de la buse de soufflage proche de cette consigne. Pour cela, un algorithme de régulation de type proportionnel intégral peut par exemple être utilisé.

La valeur de consigne de débit peut être déterminée par exemple en utilisant l'expression suivante :

$$Dcons = F * k$$

dans laquelle :

Dcons représente la consigne de débit exprimée en litres par minute (L/min) ; F représente le module de la force à appliquer sur la zone de stimulation, en Newton (N), cette valeur étant déterminée grâce à la mise en oeuvre d'un modèle d'interaction avec l'environnement virtuel ;
k est une constante exprimée en L/min*N.

Afin d'utiliser l'interface haptique de manière optimale, le choix de la distance entre la sortie de la buse de soufflage et la zone de stimulation de l'utilisateur est déterminant. Comme mentionné précédemment, un des objectifs du dispositif est de permettre une stimulation tactile sans contact. Lorsqu'une buse de soufflage présentant un angle de divergence inférieur à 12,5 degrés est utilisée, l'aérodynamique du jet d'air impose une distance inférieure à vingt centimètres pour que le jet d'air reste suffisamment concentré. Pour une telle buse, la distance entre la sortie de la buse de soufflage et la zone de stimulation de l'utilisateur doit être comprise entre dix et vingt centimètres. Préférentiellement, une distance de quinze centimètres peut être utilisée. Cette valeur est particulièrement adaptée lorsque la zone de stimulation correspond à la zone définie par les phalanges intermédiaires de la main, les phalanges intermédiaires étant celles qui sont directement reliées aux phalanges distales.

Dans un mode de réalisation de l'invention, le système haptique utilise au moins une buse de soufflage alimentée par deux sources d'air. Les flux d'air émis par ces deux sources d'air sont mélangés à des températures différentes avant d'être introduits dans la buse. Le mélange est contrôlé de manière à faire varier la température du jet d'air en sortie de la buse. A titre d'exemple, une source froide à dix degrés Celsius peut être mélangée avec une source chaude à cinquante degrés Celsius. Des moyens de contrôle du débit sont associés à chaque source d'air. Il est alors possible de faire varier avec précision la température en sortie de la buse de soufflage en adaptant le débit des deux sources. En tenant compte des pertes thermiques intervenant au niveau du système, il est possible de faire varier la température du jet d'air en sortie de la buse sur une plage allant de quinze à quarante-cinq degrés Celsius.

La stimulation thermique peut être utilisée dans de nombreuses applications. La stimulation thermique peut être utilisée pour la discrimination de valeurs positives et négatives dans des champs scolaires. Une valeur positive est par exemple représentée avec des stimuli chauds et une valeur négative avec des stimuli froids. La stimulation thermique peut également être utilisée pour communiquer des émotions. Ainsi, il est possible de transmettre à l'utilisateur du système différents degrés de plaisir. Par exemple, des émotions positives sont communiquées à l'utilisateur avec des stimuli chauds et des émotions négatives avec des stimuli froids.

En complément de l'utilisation de moyens d'émission vers la zone de stimulation d'au moins un jet d'air contrôlé en débit, le système selon l'invention peut comprendre des moyens de vaporisation d'eau vers la zone de stimulation. Pour cela, un dispositif de vaporisation d'eau ou de gouttelettes d'eau classique peut être utilisé, tel qu'un spray aérosol. Ce mode de réalisation permet de contrôler le taux d'humidité du jet d'air de sortie. La variation d'humidité permet d'associer différents niveaux de moiteur (humidité) au stimulus tactile.

## Revendications

1. Système haptique pour faire interagir au moins une partie du corps d'un utilisateur (100) appelée zone de stimulation (102) avec un environnement virtuel (105) comprenant :

   - des moyens (410) d'estimation de la position de la zone de stimulation (102) ;
   - des moyens d'émission vers la zone de stimulation (103, 402) d'au moins un jet d'air contrôlé en débit, le jet d'air étant émis en un point d'émission (110) et son débit étant déterminé en fonction de la position estimée de la zone de stimulation dans l'espace et des caractéristiques de l'environnement virtuel (105),

   **caractérisé en ce que** le système haptique comprend en outre :

   - une structure robotisée (101) contrôlée de manière à déplacer le point d'émission (110) du jet d'air de manière à ce que ledit point d'émission (110) reste à une distance constante de la zone de stimulation (102).

2. Système haptique selon la revendication 1 dans lequel la structure robotisée (101) est un bras robotisé articulé.

3. Système haptique selon l'une des revendications précédentes comprenant des moyens (413) de modélisation (405) et d'affichage (406) de l'environnement virtuel avec lequel l'utilisateur va interagir.

4. Système haptique selon la revendication 3 dans lequel l'environnement virtuel correspond à une modélisation (405) d'un environnement réel (407) avec lequel l'utilisateur interagit à distance.

5. Système haptique selon l'une des revendications précédentes dans lequel les moyens d'émission comprennent un dispositif de type contrôleur de débit massique de manière à contrôler le débit du jet d'air.

6. Système haptique selon l'une des revendications précédentes dans lequel les moyens d'émission comprennent une buse de soufflage, le point d'émission du jet d'air (110) correspondant à l'extrémité libre de ladite buse.

7. Système haptique selon la revendication 6 dans lequel la buse de soufflage est alimentée par au moins deux sources d'air de températures différentes, lesdits flux étant mélangés de manière à faire varier la température du jet d'air en sortie de la buse.

8. Système haptique selon l'une des revendications précédentes dans lequel la zone de stimulation correspond à la zone définie par les phalanges intermédiaires de la main de l'utilisateur (100).

9. Système haptique selon l'une des revendications 6 à 8 dans lequel la buse de soufflage présente un angle de divergence inférieur à 12,5 degrés de manière à obtenir stimuler une surface peu étendue de la zone de stimulation (102).

10. Système haptique selon la revendication 9 dans lequel la distance entre la sortie de la buse de soufflage et la zone de stimulation de l'utilisateur est comprise entre dix et vingt centimètres.

11. Système haptique selon la revendication 9 dans lequel la distance entre la sortie de la buse de soufflage et la zone de stimulation de l'utilisateur est égale à quinze centimètres.

12. Système haptique selon la revendication 8 dans lequel la buse de soufflage présente un angle de divergence entre 12,5 degrés et 22 degrés de manière à stimuler une surface étendue de la zone de stimulation (102).

13. Système haptique selon l'une des revendications 6 à 12 dans lequel un contrôleur de débit est utilisé de manière à faire varier le débit d'air alimentant la buse de soufflage.

14. Système selon la revendication 13 comprenant un capteur de débit utilisé de manière à obtenir une estimation du débit d'émission à l'entrée de la buse de soufflage.

15. Système selon la revendication 14 dans lequel une valeur de régulation est appliquée au contrôleur de débit de manière à obtenir un débit en sortie de la buse de soufflage proche d'une valeur de consigne Dcons lorsqu'une différence entre la valeur estimée de débit et la consigne Dcons est détectée.

16. Système selon la revendication 15 dans lequel l'estimation du débit à l'entrée de la buse de soufflage est comparée avec une valeur de consigne Dcons à l'aide d'un régulateur électronique numérique.

17. Système haptique selon l'une des revendications 15 ou 16 dans lequel la valeur de consigne de débit Dcons est déterminée en utilisant l'expression suivante :

$$Dcons = F * k$$

dans laquelle :

Dcons représente la consigne de débit exprimée en litres par minute (L/min) ;
F représente le module de la force à appliquer sur la zone de stimulation, en Newton (N), cette valeur étant déterminée grâce à la mise en oeuvre d'un modèle d'interaction avec l'environnement virtuel ;
k est une constante exprimée en L/min*N.

18. Système haptique selon l'une des revendications précédentes comprenant des moyens de vaporisation d'eau vers la zone de stimulation de manière à faire varier le niveaux d'humidité de ladite zone.

19. Système selon la revendication 18 dans lequel les moyens de vaporisation d'eau sont mis en oeuvre à l'aide d'un spray aérosol.

**Patentansprüche**

1. Haptische Vorrichtung zur Herstellung einer Wechselwirkung zwischen mindestens einem Teil des Körpers, dem sogenannten Stimulationsbereich (102), eines Benutzers (100) und einer virtuellen Umgebung (105), umfassend:

- Mittel (410) zur Schätzung der Position des Stimulationsbereichs (102);
- Mittel zur Ausgabe mindestens eines durchsatzgesteuerten, auf einen Stimulationsbereich (103, 402) ausgerichteten Luftstrahls, wobei der Luftstrahl an einer Ausgabestelle (110) ausgegeben und sein Durchsatz in Abhängigkeit von der geschätzten räumlichen Position des Stimulationsbereichs und von den Eigenschaften der virtuellen Umgebung (105) festgestellt wird,

**dadurch gekennzeichnet, dass** die haptische Vorrichtung außerdem umfasst:

- eine Roboterkonstruktion (101), derart gesteuert, sodass die Ausgabestelle (110) des Luftstrahls bewegt wird, damit die Ausgabestelle (110) in einem konstanten Abstand zum Stimulationsbereich (102) bleibt.

2. Haptische Vorrichtung nach Anspruch 1, wobei die Roboterkonstruktion (101) ein schwenkbarer Roboterarm ist.

3. Haptische Vorrichtung nach einem der vorhergehenden Ansprüche, Mittel (413) zur Modellierung (405) und Anzeige (406) der virtuellen Umgebung umfassend, mit welcher der Benutzer in Wechselwirkung treten wird.

4. Haptische Vorrichtung nach Anspruch 3, wobei die virtuelle Umgebung einer Modellierung (405) einer reellen Umgebung (407) entspricht, mit welcher der Benutzer berührungslos in Wechselwirkung besteht.

5. Haptische Vorrichtung nach einem der vorhergehenden Ansprüche, wobei die Ausgabemittel eine massendurchsatzsteuerungsartige Vorrichtung zur Steuerung des Durchsatzes des Luftstrahls umfassen.

6. Haptische Vorrichtung nach einem der vorhergehenden Ansprüche, wobei die Ausgabemittel eine Blasdüse umfassen, wobei die Ausgabestelle des Luftstrahls (110) dem freien Ende der Blasdüse entspricht.

7. Haptische Vorrichtung nach Anspruch 6, wobei die Blasdüse mit mindestens zwei Luftquellen mit verschiedenen Temperaturen versorgt wird, wobei die Luftströme zur Veränderung der Temperatur des Luftstrahls vermischt werden.

8. Haptische Vorrichtung nach einem der vorhergehenden Ansprüche, wobei der Stimulationsbereich dem durch die mittleren Phalangen der Hand des Benutzers (100) definierten Bereich entspricht.

9. Haptische Vorrichtung nach einem der Ansprüche 6 bis 8, wobei die Blasdüse einen Divergenzwinkel kleiner 12,5 Grad aufweist, sodass eine kleinere Fläche des Stimulationsbereichs (102) erzielt stimuliert wird.

10. Haptische Vorrichtung nach Anspruch 9, wobei der Abstand zwischen dem Ausgang der Blasdüse und dem Stimulationsbereich des Benutzers bei 10 bis 20 cm liegt.

11. Haptische Vorrichtung nach Anspruch 9, wobei der Abstand zwischen dem Ausgang der Blasdüse und dem Stimulationsbereich des Benutzers gleich 15 cm ist.

12. Haptische Vorrichtung nach Anspruch 8, wobei die Blasdüse einen Divergenzwinkel zwischen 12,5 und 22 Grad aufweist, sodass eine ausgedehnte Fläche des Stimulationsbereichs (102) stimuliert wird.

13. Haptische Vorrichtung nach einem der Ansprüche 6 bis 12, wobei eine Durchsatzsteuerung zur Veränderung des die Blasdüse versorgenden Luftdurchsatzes verwendet wird.

14. Vorrichtung nach Anspruch 13, einen Durchsatzsensor umfassend, welcher zur Gewinnung einer Schätzung des Ausgabebeginns am Eingang der Blasdüse verwendet wird.

15. Vorrichtung nach Anspruch 14, wobei die Durchsatzsteuerung mit einem Regelungswert derart beaufschlagt wird, sodass am Ausgang der Blasdüse ein Durchsatz erzielt wird, der nah an einem Sollwert "Dcons" liegt, wenn ein Unterschied zwischen dem geschätzten Durchsatzwert und dem Sollwert Dcons erkannt wird.

16. Vorrichtung nach Anspruch 15, wobei mittels eines digitalen elektronischen Reglers der geschätzte Wert des Durchsatzes am Eingang der Blasdüse mit einem Sollwert Dcons verglichen wird.

17. Haptische Vorrichtung nach einem der Ansprüche 15 oder 16, wobei der Sollwert für den Durchsatz Dcons unter Anwendung der folgenden Formel ermittelt wird:

$$Dcons = F * k$$

WO:

Dcons den Sollwert für den Durchsatz in Liter pro Minute (L/Min) darstellt;
F das Modul der auf dem Stimulationsbereich zu beaufschlagenden Kraft in Newton (N) darstellt, wobei dieser Wert durch die Anwendung eines Interaktionsmodells mit der virtuellen Umgebung bestimmt wird;
K eine Konstante in L/Min*N ist.

**18.** Haptische Vorrichtung nach einem der vorhergehenden Ansprüche, Mittel zur Verdampfung von Wasser in Richtung des Stimulationsbereichs zur Veränderung des Feuchtigkeitsgehalts des Bereichs umfassend.

**19.** Vorrichtung nach Anspruch 18, wobei die Mittel zur Wasserverdampfung mit Hilfe eines Aerosol-Sprays eingesetzt werden.

## Claims

**1.** A haptic system for establishing an interaction between at least one part of the body of a user (100) called stimulation zone (102) and a virtual environment (105) and comprising:

- means (410) for estimating the position of the stimulation zone (102);
- means for emitting, toward the stimulation zone (103, 402), at least one flow rate-controlled air jet, the air jet being emitted at a point of emission (110) and its flow rate being determined as a function of the estimated position of the stimulation zone in space and of the characteristics of the virtual environment (105);

**characterized in that** the haptic system further comprinsing:

- a robotized structure (101) controlled so as to move the point of emission (110) of the air jet so that said point of emission (110) remains at a constant distance from the stimulation zone (102).

**2.** The haptic system according to claim 1, in which the robotized structure (101) is an articulated robotized arm.

**3.** The haptic system according to one of the preceding claims, comprising means (413) for modeling (405) and displaying (406) the virtual environment with which the user will interact.

**4.** The haptic system according to claim 3, in which the virtual environment corresponds to a modeling (405) of a real environment (407) with which the user interacts remotely.

**5.** The haptic system according to one of the preceding claims, in which the emission means comprise a device of mass flow rate controller type so as to control the flow rate of the air jet.

**6.** The haptic system according to one of the preceding claims, in which the emission means comprise a blowing nozzle, the point of emission of the air jet (110) corresponding to the free end of said nozzle.

**7.** The haptic system according to claim 6, in which the blowing nozzle is fed by at least two sources of air of different temperatures, said flows being mixed so as to vary the temperature of the air jet at the outlet of the nozzle.

**8.** The haptic system according to one of the preceding claims, in which the stimulation zone corresponds to the zone defined by the intermediate phalanges of the hand of the user (100).

**9.** The haptic system according to one of claims 6 to 8, in which the blowing nozzle has an angle of divergence of less than 12.5 degrees so as to obtain stimulate a small area of the stimulation zone (102).

**10.** The haptic system according to claim 9, in which the distance between the outlet of the blowing nozzle and the stimulation zone of the user is between ten and twenty centimeters.

**11.** The haptic system according to claim 9, in which the distance between the outlet of the blowing nozzle and the stimulation zone of the user is equal to fifteen centimeters.

**12.** The haptic system according to claim 8, in which the blowing nozzle has an angle of divergence of between 12.5 degrees and 22 degrees so as to stimulate an extended area of the stimulation zone (102).

**13.** The haptic system according to one of claims 6 to 12, in which a flow rate controller is used so as to vary the flow rate of air feeding the blowing nozzle.

**14.** The system according to claim 13, comprising a flow rate sensor used so as to obtain an estimation of the emission flow rate at the inlet of the blowing nozzle.

**15.** The system according to claim 14, in which a regulation value is applied to the flow rate controller so as to obtain a flow rate at the outlet of the blowing nozzle close to a setpoint value Dcons when a difference between the estimated flow rate value and the setpoint Dcons is detected.

**16.** The system according to claim 15 in which the estimation of the flow rate at the inlet of the blowing nozzle is compared with a setpoint value Dcons using a digital electronic regulator.

**17.** The haptic system according to one of claims 15 and 16, in which the flow rate setpoint value Dcons is determined by using the following expression:

$$Dcons = F * k$$

in which:

Dcons represents the flow rate setpoint expressed in liters per minute (L/min);

F represents the modulus of the force to be applied to the stimulation zone, in newtons (N), this value being determined using the implementation of a model of interaction with the virtual environment;

k is a constant expressed in L/min*N.

18. The haptic system according to one of the preceding claims, comprising means for spraying water toward the stimulation zone so as to vary the level of humidity of said zone.

19. The system according to claim 18, in which the water spraying means are implemented using an aerosol spray.

FIG.1

FIG.2

ACQUISITION — 300

CALIBRAGE — 301

302 — IMAGE CALIBRÉE

303 — FILTRAGE

304 — BINARISATION

305 — CONTOURS

306 — ESTIMATION

x, y, z

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1768011 A
- WO 2011117794 A
- US 2003117371 A

**Littérature non-brevet citée dans la description**

- **H. TAKAYUKI ; T. MASAFUMI ; I. TAKAYUKI ; S. HIROYUKI.** Noncontact tactile display based on radiation pressure of airborne ultrasound. *IEEE Transactions on Haptics,* 2010, vol. 3 (3), 155-165
- **Y. SUZUKI ; M. KOBAYASHI.** Air jet driven force feedback in virtual reality. *IEEE Computer Graphics and Applications,* 2005, 44-47